Europäisches Patentamt

European Patent Office

Office européen des brevets

(19)

(11) Publication number: **0 016 752**
**B1**

# EUROPEAN PATENT SPECIFICATION

(12)

(45) Date of publication of patent specification: **05.10.83**

(51) Int. Cl.³: **G 01 K 7/22, H 01 R 11/24**

(21) Application number: **78900189.8**

(22) Date of filing: **03.07.78**

(86) International application number:
**PCT/SE78/00013**

(87) International publication number:
**WO 80/00192 07.02.80 Gazette 80/3**

(54) **A DEVICE FOR GRIPPING AND FOR READING VALUES OBTAINED BY MEANS OF A TEMPERATURE MEASURING DEVICE.**

(43) Date of publication of application:
**15.10.80 Bulletin 80/21**

(45) Publication of the grant of the patent:
**05.10.83 Bulletin 83/40**

(84) Designated Contracting States:
**CH DE FR GB LU SE**

(56) References cited:
**BR - A - 1 339 098**
**SE - A - 78 030 467**
**SE - A - 78 041 993**
**US - A - 3 260 114**
**US - A - 3 642 008**
**US - A - 3 681 993**
**US - A - 3 949 609**
**US - A - 3 999 537**

(73) Proprietor: **Crafon Medical AB**
**Box 10101**
**S-220 10 Lund (SE)**

(72) Inventor: **HAKANSSON, Bo, Hakan**
**Astrakanvägen 6**
**S-223 56 Lund (SE)**
Inventor: **PERSSON, Per, Eskil, Lennart**
**Bredgatan 27**
**S-222 21 Lund (SE)**

(74) Representative: **Boberg, Nils Gunnar Erik**
**Gambro AB Patent Department Box 10101**
**S-220 10 Lund (SE)**

Courier Press, Leamington Spa, England

A device for gripping and for reading values obtained by
means of a temperature measuring device

Technical Field

The present invention relates to a tonglike device for gripping a temperature measuring device and for displaying measured values obtained with the measuring device, the temperature measuring device comprising a temperature-sensitive sensor, whose electrical properties, e.g. the resistance vary with the temperature, e.g. a thermistor, and which is connected via two contacts to two electrical conductors, which terminate in two first contact surfaces remote from the sensor, the gripping device including at least two second contact surfaces arranged on the inside or insides of the jaws of the tonglike device and which can be coupled to the said first contact surfaces when the jaws are closed.

The device in accordance with the invention is intended mainly to be used for medical temperature measurement. It will be clear, however, to those versed in the art that it can also be used in other circumstances, e.g. in purely industrial applications.

Background Art

An embodiment of the device in accordance with the invention is specially adapted for temperature measuring devices of the type which is described in the US Patents 4 317 367, 4 200 970, 4 236 298.

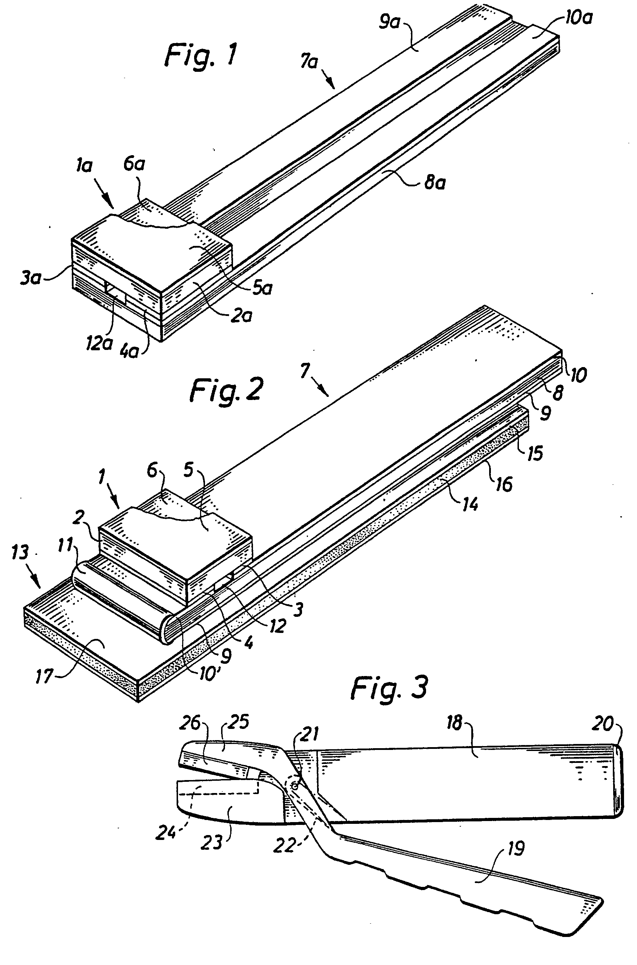

Another embodiment of the subject of the invention is specially adapted for a temperature measuring device which is described in detail in the PCT application PCT/SE78/00012 (WO 80/00191) submitted at the same time, which describes a simplified temperature measuring device and a method for the manufacture of such a device. The latter temperature measuring device is also shown in Fig. 2 of the drawings discussed below.

As example of prior art the US Patents 3 260 114, 3 642,008 and 3 999 527 may also be mentioned, showing different measuring devices by which the measuring unit is connected to a reading unit by means of a cable. Please compare also the British Patent 1 339 098 describing an apparatus and a method for determining the polarity of thermocouples.

Disclosure of the Invention

The tonglike device in accordance with the invention is characterized in that these second contact surfaces constitute part of a circuit which comprises in addition within said tonglike device a source of energy, a display unit and means for the conversion of the measured value obtained to a value which can be displayed on the display unit, when the circuit is closed by the tonglike device gripping the temperature measuring device in the appropriate manner.

If the device in accordance with the invention is used for medical temperature measurement, the tonglike construction enables the user to grip and to read very reliably and rapidly a temperature measuring device placed, for example, in the mouth of a patient. At the same time this gripping and reading can take place in a satisfactorily hygienic manner.

The device according to the invention is in the first place intended for hospital use. By such a use the invention make it possible for the nurse to distribute one temperature probe to each of the patients in a hospital ward. Thereafter she may easily in a convenient and hygienic way collect the probes one by one without any delay. After the nurse has read the temperature values displayed she may drop the temperature probes in a waste basket by just only opening the tonglike device.

In cases where the said temperature measuring device has two electric conductors arranged on one and the same side of a support, each jaw of the tonglike construction can be provided on its inside with two measuring contact surfaces for the coupling together with the respective contact surfaces on the electric conductors. These contact surfaces are appropriately coupled together two and two with one from each jaw in such a manner that the temperature measuring device can be introduced with either side up.

In the case where the temperature measuring device is designed so that its electric conductors are arranged on opposite sides of a striplike support, each jaw of the tonglike construction can be provided on its inside with only one measuring contact surface.

The temperature measuring device used is appropriately made as small and simple as possible so that it can be thrown away after use. The device for gripping and reading of the temperature measuring device however is adapted so as to be suitable for a normal hand. Consequently, it is appropriate to provide it with means for guidance of the temperature measuring device and its contact surfaces so that they may be led to make reliable contact with the measuring contact surfaces in the same.

The said means for guiding the temperature measuring device and its contact surfaces may consist, for example, of a substantially V-shaped groove inside one of the jaws and a corresponding projection on the inside of the other jaw.

The abovementioned V-shaped groove and corresponding projection are appropriately designed so that their cross-section dimishes towards the interior of the jaw and corresponds farthest in to the width of the temperature measuring device used.

The device in accordance with the invention can be adapted so that it closes around the temperature measuring device used against the effect of a spring. In practice, however, it has been found appropriate if the jaws are adapted so that they are opened against the effect of a spring, which on closing of the jaws produces a certain minimum contact pressure between measuring contact surfaces of the device and corresponding contact surfaces of the temperature measuring device used.

The tonglike construction appropriately comprises a housing-like casing which encloses the said source of energy, e.g. a battery, the said means for conversion of the measuring value obtained, together with the said display unit which comprises an outer reading window, the casing forming one jaw, whilst the other jaw is formed by a finger grip part which is spring-mounted in the casing.

Brief Description of the Drawings

Fig. 1 shows a first example of a temperature measuring device which is suitable for use together with the device in accordance with the invention.

Fig. 2 shows a second example of such a temperature measuring device suitable for use together with the device in accordance with the invention.

Fig. 3 shows a device in accordance with the invention especially adapted for utilization together with the temperature measuring device in accordance with fig. 1.

Fig. 4—7 shows four views seen from different directions of a component part of the device according to fig. 3.

Fig. 8, 9 and 10 in the same manner show three views perpendicular to one another of a second component part of the device according to fig. 3.

Fig. 11 and 12 in the same manner show two views perpendicular to one another of a third component part of the device according to fig. 3.

Fig. 13 shows a preferred embodiment of the device in accordance with the invention adapted to utilization together with the temperature measuring device according to fig. 2.

Fig. 14—17 show four views seen from different directions and partly in section, of a casing substantially corresponding to the shell shown in fig. 13, but modified a little with regard to the outer shape.

Fig. 18—20 show three views perpendicular to one another of a finger grip component adapted to the casing according to fig. 14—17.

Fig. 21 and 22 in the same manner show two view perpendicular to one another of a lid adapted to the casing according to fig. 14—17.

Fig. 23 and 24 show schematically a shape of a contact suitable for the jaws on the construction shown in fig. 13.

Fig. 25 and 26 show other contact shapes which are more suitable for the construction according to fig. 3—12.

Fig. 27 and 28 show a pair of simple alternatives especially for the measuring device shown in fig. 1.

Fig. 29—32 shows schematically four different alternative contact arrangements.

Fig. 33 and 34 shows schematically how the different electrical components can be arranged in a simple manner so that they are readily exchangeable in the casing of the tonglike construction according to the invention.

Fig. 35 fially shows a schematic wiring diagram for the electrical equipment present.

Temperature Measuring Devices Usable in Association with the Invention

In fig. 1 a temperature measuring device is shown which is usable in association with the invention. However, in fig. 2 a preferred temperature measuring device is shown, and this will therefore be described first.

It consists of a sensor 1 which in the example shown is constituted by a thermistor. This thermistor consists of an inner ceramic material 2, whose electric resistance varies with the temperature. On its underside the thermistor is provided with two contacts 3 and 4, which for example may consist of a thin layer of silver. Similarly, the thermistor is provided on its upper side with a silver contact 5 intended for trimming. The trimming may take place in such a manner that a small area 6 is removed from the contact by mechanical treatment, e.g. shot peening or with the help of a laster beam.

The thermistor is arranged on a support 7 which consists of an inner plastic material 8 with outer metal coatings 9 and 10. These metal coatings may, for example, consist of copper. At its front end, that is to say, at the end provided with the sensor, the support 7 is shortcircuited by a soldering 11 in such a manner that the metal coating 9 is in contact with a part 10' of the upper layer 10. This part 10' of the upper metal coating 10 is separated from the rest of this metal coating by a cut 12 which is intended to isolate electrically the two contacts 3 and 4 from one another.

The support 7 with the thermistor 1 described above in turn is placed on a somewhat broader strip 13. This strip 13 may consist of an inner cardboard material with outer plastic coatings 15 and 16. The support 7 is placed so that the thermistor 1 is fully located within the surface 17 of the somewhat broader strip 13 carrying the support 7. The opposite end of the support on the other hand is arranged so that it projects beyond the somewhat broader strip 13. The idea behind this is that the part of the total construction shown to the right in fig. 2 should be capable of being dipped in an insulating plastic coating, so that the thermistor 1, the connecting contacts 3, 4 and 5 together with at least the nearest parts of the electric conductors 9 and 10 are enwrapped in a tight manner together with the corresponding end of the somewhat broader strip 13. This plastic coating may be made relatively thin with the help of transparent material and is therefore not shown in fig. 2. The sterile package, into which the construction is finally to be packed until its use, is also not shown.

The measuring device in accordance with fig. 1 corresponds in principle to that according to fig. 2. Consequently, the same reference numerals have been used, but with the addition of the letter *a*. The main difference is that the two electric conductors 9a and 10a are arranged on one and the same side of the same supporting plastic layer 8a. Furthermore, this construction lacks the plastic-coated supporting sheet 13 of cardboard which is present in the construction according to fig. 2.

Description of a First Embodiment of the Device in Accordance with the Invention.

In fig. 3—12 a first embodiment of the device in accordance with the invention is described. This first embodiment is mainly adapted to the temperature measuring device shown in fig. 1 which has its contacts 9a and 10a arranged on one and the same side of a support 8a.

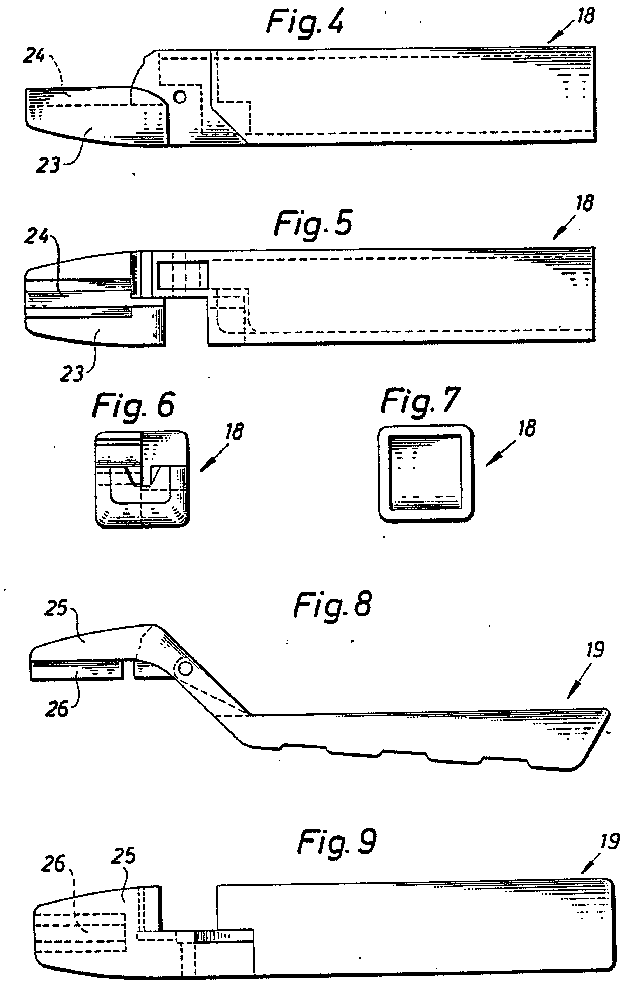

The construction shown consists of a first tong-half 18 which is illustrated in fig. 4—7 and a second tong-half 19 which is illustrated in fig. 8—10. Furthermore, a lid 20 is included which is shown in fig. 11—12.

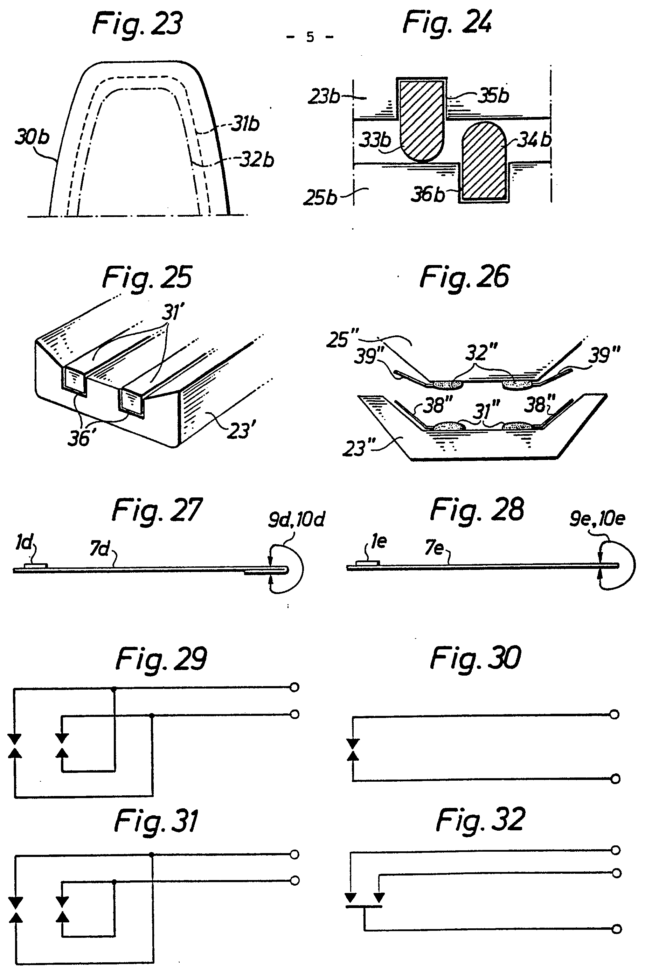

The two tong-halves are mounted on each other with the help of an axle 21 and are normally retained in open position with the help of a spring 22. The tongs are thus closed against the effect of this spring. The tong-half 18 is provided at its front end, that is to say, the lower jaw 23, with a substantially V-shaped groove 24. In the same manner the other tong-half 19 is provided at its front end, that is to say, the upper jaw 25, with a corresponding projection 26. This V-shaped groove and this projection respectively are shown in the figures with constant cross-section. In practice, however, they are appropriately shaped so that their cross-section diminishes towards the interior of the jaw, so that they guide the contacts 9a and 10a of the measuring device 7a used even more securely to make contact with the corresponding contact surfaces inside the tong jaws. The latter contact surfaces are described in more detail in the following with reference to e.g. fig. 25 and 26. For the rest, fig. 3—12 should be sufficiently clear, so that no further detailed explanation is required.

Preferred Embodiment of the Subject of the Invention

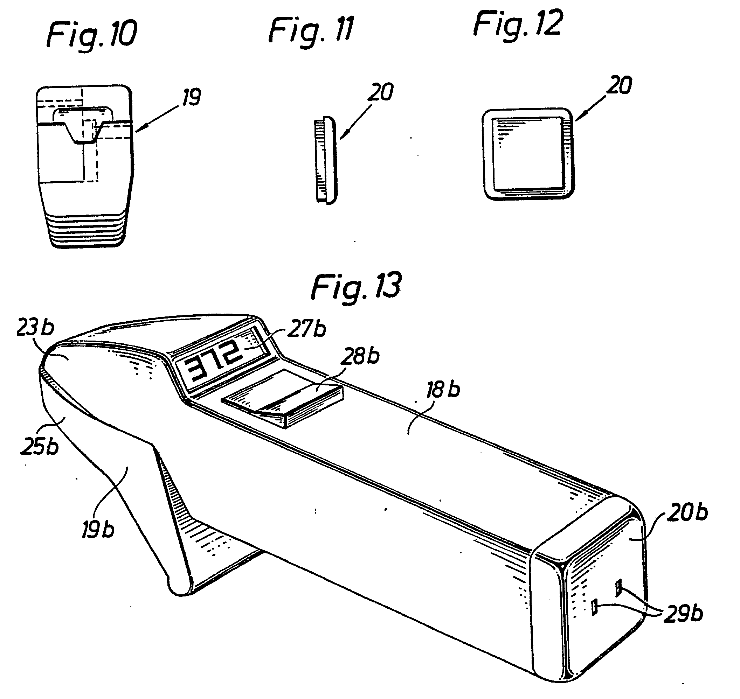

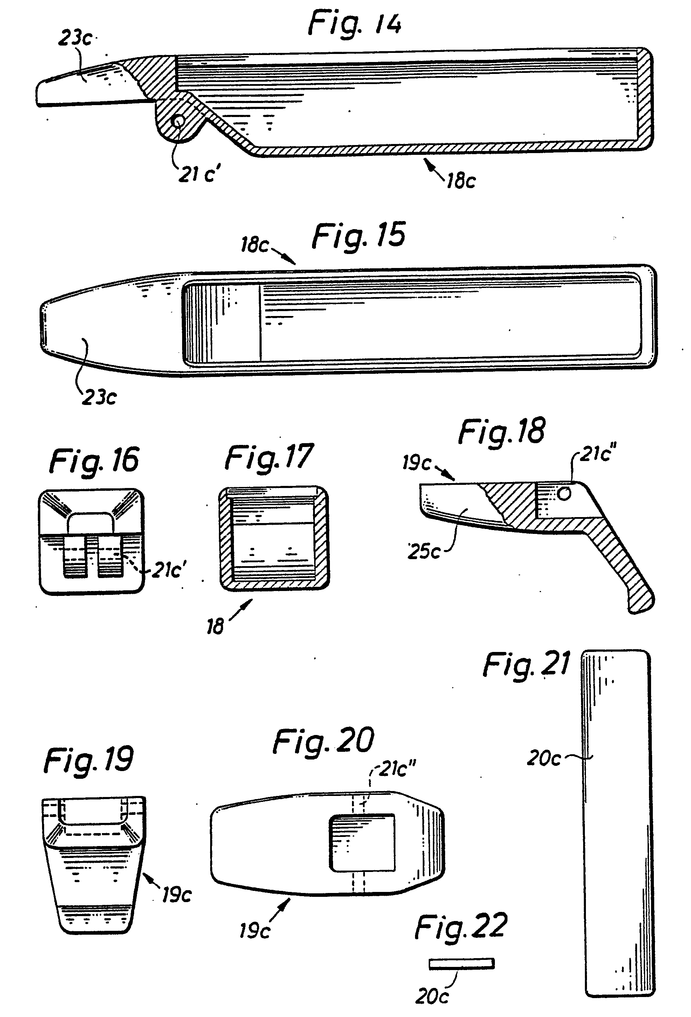

Fig. 13 shows an embodiment of the subject of the invention which is preferred from a point of view of design. How this embodiment which is preferred from a point of view of design can be produced in practice should be evident from fig. 14—22, which show a similar technical construction, but of a somewhat modified shape.

The constructions according to fig. 13—20 correspond in essential parts to the construction according to fig. 3—12. Consequently, the same reference numerals have been used, but with the addition of the letter *b* in fig. 13 and *c* in fig. 14—22.

The construction according to fig. 13 thus consists of a square casing 18b which at its one end is closed by a lid 20b. At the front end of the casing 18b is mounted a finger-grip part 19b. The casing 18b moreover has a reading window 27b which forms part of a display unit present inside the device. Furthermore, the casing comprises an electric switch 28b which is operated when it is desired to read the temperature. At 29b finally an electrical connection is indicated for the possible recharging of a battery arranged inside the device.

The construction according to fig. 14—22 also consists of a substantially square casing 18c and a grip part 19c. Moreover, a lid 20c is present.

The construction according to fig. 14—22 is intended mainly to be used together with the measuring device according to fig. 2. It does not require, therefore, the same guidance of the measuring device as the device according to fig. 3—12. Consequently, there are no parts here corresponding to the V-shaped groove 24 and the V-shaped projection 26. The shape of the contacts is described in more detail in the following with reference to fig. 23 and 24.

The finger grip part 19c is mounted in the casing 18c with the help of an axle (not shown) which is intended to be introduced into the holes 21c' and 21c" respectively. Furthermore, the construction is to be provided with a spring (not shown) corresponding to the spring 22 in the construction according to fig. 3. This spring is appropriately arranged in such a manner, however, that it normally holds the two jaws 23c and 25c closed against one another. The opening of the tongs thus has to take place against the effect of the spring force. Thus it will be this spring force which will produce a certain defined pressure on the contact surfaces of the measuring device used.

Suitable Contact Shapes

In fig. 23 and 24 a shape of the contact suitable for the construction according to fig. 13 is described. Consequently reference numerals with the additional letter *b* are used. The same construction may also be used, however, in the embodiment according to fig. 14—22.

The line 30b indicates the outer contour for either the upper jaw 23b or for the lower jaw 25b. Numeral 31b indicates the contour of the contact surface of the lower jaw, whilst 32b designates the corresponding contact surface of the upper jaw.

The respective contact surfaces, as shown in fig. 24, may consist of strips 33b and 34b respectively arranged in grooves 35b and 36b respectively in the upper jaw 23b and in the lower jaw 25b respectively.

It is also conceivable to have a further U-shaped strip in the lower jaw inside the upper jaw. This design may also be used conversely, so that two strips are placed in the upper jaw with a strip in the bottom jaw located in between.

The strips should be made of a non-oxidizing material which gives good electric contact with e.g. copper. Thus e.g. an outer layer of silver or gold may be used. Moreover, it is important that the realization is such that no unintentional short-circuiting in the circuits is obtained.

In fig. 25 is shown how two electric conductors 31' can be placed in two grooves 36' in a lower jaw substantially corresponding to the lower jaw 23 in the embodiment according to fig. 3—12.

In fig. 26 a further contact arrangement is shown which is suitable for the embodiment of the subject of the invention shown in fig. 3—12. Here the lower jaw is designated 23" and the upper one 25". Furthermore, the electric contacts in the lower half are designated 31" and those in the upper half 32". Thanks to the contact sheet 38" and 39" it is sufficient here to connect only the contacts 31" to the working circuit included in the construction. In spite of this the measuring device according to fig. 1 can be introduced between the jaws 23" and 25" with its top side turned either upwards or downwards.

If it is desired to use the construction according to fig. 3—12, but with contacts only in the one jaw, the measuring device according to fig. 1 can be modified in the manner as indicated in fig. 27 and 28. In the construction according to fig. 27 the whole measuring device 7d is folded over at the end remote from the thermistor 1d, so that electric conductors 9d and 10d corresponding to 9a and 10a are present once again on both sides of the measuring device.

In the construction according to fig. 28 it is instead the electric conductors 9e and 10e that are bent around the edge of the end of the measuring device 7e remote from the thermistor 1e.

In fig. 29—32 different contact arrangements are shown schematically. Fig. 29 and 31 correspond closest to that according to fig. 26. In the same manner the construction according to fig. 30 substantially corresponds to the contact arrangement according to fig. 23—24. Fig. 32 shows that it is also possible to have two contacts in the one jaw and a wider contact in the other jaw.

Internal Electric Equipment

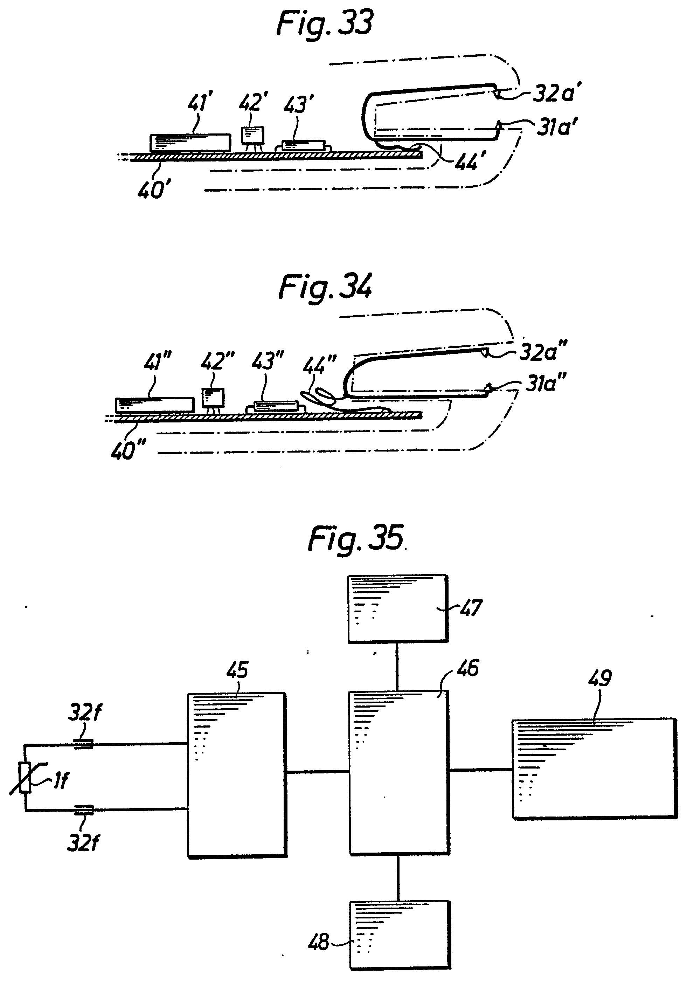

In fig. 33 and 34 is shown schematically how the internal electrical equipment may be arranged so that it is readily exchangeable on a board 40' and 40" respectively. The numerals 41', 41"; 42', 42" and 43', 43" indicate the parts included such as e.g. a microprocessor, a transistor and a resistor respectively. The board 40' is subsequently connected electrically to the contacts 31a' and 32a' via a spring sliding contact 44'. In a corresponding manner the board 40" is connected to the contacts 32a" and 31a" via a connection cable 44", which means that the electrical parts may be taken out of the casing without the contact with contacts 31a" and 32a" being broken.

In fig. 35 finally a simple wiring diagram of the electric system as a whole is shown.

Numeral 1f designates the thermistor which forms part of the measuring device. 31f and 32f designate the contact surfaces on the measuring device as well as the corresponding contact surfaces in the respective tong jaws. Numeral 45 designates a tuning and supply component which transmits a low current through 1f to measure the resistance of the same which varies with the temperature. The value obtained is tuned in the form of a signal to a processor 46 which may be said to constitute a small micro-computer. This micro-computer contains e.g. a clock and an arithmetic element which can be programmed for different programmes, e.g. for measurement in °C or in °F. The correct programme is selected with the help of a control unit 47. Numeral 48 designates an actuating button which is operated when reading is required. The value finally obtained is shown on a display unit 49. The source of energy required, e.g. a battery, may be included e.g. in part 45. Alternatively, it can be arranged separately and be connected in a suitable manner to the remaining parts of the system.

The component parts 45—49 may be varied in their construction and function within wide limits. It would serve no purpose therefore to describe these parts in greater detail. Anybody versed in the art who wishes to pursue the invention only needs to specify his wishes to a supplier of such parts, so that the latter can then "tailor-make" the parts in accordance with the wishes specified.

Naturally, the invention is not limited merely to the embodiments described above, but it can be varied within the scope of the following claims. For example, as an alternative to the thermistor 1 (1a) a thermocouple can be used, whose electromotoric force varies with the temperature.

## Claims

1. A tonglike device for gripping a temperature measuring device (7) and for displaying measured values obtained with the measuring device, the temperature measuring device comprising a temperature-sensitive sensor (1), whose electrical properties, e.g. the resistance, vary with the temperature, e.g. a thermistor, and which is connected via two contacts (3, 4) to two electric conductors (9, 10), which terminate in two first contact surfaces remote from the sensor (1), the gripping device including at least two second contact surfaces (31b, 32b; 31', 31'; 31", 31"; 32", 32"; 31a', 32a'; 31a"; 32a") arranged on the inside or insides of the jaws of the tonglike device and which can be coupled to the said first contact surfaces when the jaws are closed, characterized in that these second contact surfaces (31, 32) constitute part of a circuit which comprises in addition within said tonglike device a source of energy (45), a display-unit (49) and means (45, 46, 47, 48) for the conversion of the measured value obtained to a value which can be displayed on the display unit (49), when the circuit is closed by the tonglike device gripping the temperature measuring device (7) in the appropriate manner.

2. A device in accordance with claim 1, for a temperature measuring device (7a) with the said electric conductors (9a, 10a) arranged on one and the same side of a support (8a), characterized in that each jaw (23, 25) of the tonglike construction is provided on its inside with two of said second contact surfaces (e.g. 31') for contacting with the respective first contact surfaces on the electric conductors (9a, 10a), these second contact surfaces being appropriately coupled together two and two with one from each jaw in such a manner that the temperature measuring device (7a) can be introduced with either side upwards (Figs. 26, 29, 31).

3. A device in accordance with claim 1, for a temperature measuring device with the said electric conductors (9, 10) arranged on opposite sides of a striplike support (8), characterized in that each jaw (e.g. 23b, 25b) of the tonglike device is provided on its inside with one second contact surface.

4. A device in accordance with claim 1, characterized by means (e.g. 24, 26) for the guiding of the temperature measuring device (e.g. 7a) and its first contact surfaces to make contact with said second contact surfaces (e. g. 31').

5. A device in accordance with claim 4, characterized in that the said means for guiding the temperature measuring device (7a) and its first contact surface are constituted by a substantially V-shaped groove (24) inside one of the jaws (23) and a corresponding projection (26) inside the other jaw (25).

6. A device in accordance with claim 5, characterized in that the V-shaped groove (24) and the corresponding projection (26) each have a cross-section which diminishes towards the interior of the jaws and corresponds farthest in to the width of the temperature measuring device (7a).

7. A device in accordance with claim 1, characterized in that the jaws are adapted so as to be openable against the action of a spring, which is adapted to produce the required coupling pressure when the jaws enclose the temperature measuring device and its contact surfaces.

8. A device in accordance with any one of the preceding claims, characterized in that the tonglike device comprises a housing-like casing (e.g. 18b) enclosing the said source of energy (45) e.g. a battery, the said means (45—48) for the conversion of the measuring value obtained, together with the said display unit (49) which comprises an outer reading window (e.g. 27b), this casing (18b) forming one jaw (23b), whilst the other jaw is formed by a finger-grip part (19b) which is spring-mounted on the casing.

**Revendications**

1. Dispositif du type à pince pour saisir un dispositif (7) de mesure de température et pour afficher les valeurs mesurées obtenues au moyen du dispositif de mesure, le dispositif de mesure de température comprenant un détecteur (1) sensible à la température dont les propriétés électroques, par exemple la résistance, varient avec la température, par exemple une thermistance, et qui est raccordé par l'intermédiaire de deux contacts (3, 4) à deux conducteurs électriques (9, 10) qui se terminent dans deux premières surfaces de contact éloignées du détecteur (1), le dispositif de préhension comportant au moins deux deuxièmes surfaces de contact (31b, 32b; 31', 31'; 31", 31"; 32", 32"; 31a', 32a'; 31a"; 32a") prévues sur la ou les faces intérieures de mâchoires du dispositif à pince et qui peuvent être couplées auxdites premières surfaces de contact lorsque les mâchoires sont fermées, caractérisé en ce que ces deuxièmes surfaces de contact (31, 32) constituent une partie d'un circuit qui comprend en outre, à l'intérieur du dispositif à pince, une source d'énergie (45), une unité d'affichage (49) et des moyens (45, 46, 47, 48) pour la transformation de la valeur mesurée obtenue en une valeur qui peut être indiquée sur l'unité d'affichage (49), lorsque le circuit est fermé par le dispositif à pince qui saisit le dispositif (7) de mesure de température, de la manière appropriée.

2. Dispositif suivant la revendication 1, pour un dispositif (7a) de mesure de témpérature dont les conducteurs électriques (9a, 10a) sont placés sur une même face d'un support (8a), caractérisé en ce que chaque mâchoire (23, 25) de la construction à pince comporte sur sa face intérieure deux desdites deuxièmes surfaces de contact (par exemple 31'), pour venir en contact avec les premières surfaces de contact respectives sur les conducteurs électriques (9a, 10a), ces deuxièmes surfaces de contact étant connectées ensemble de façon appropriée deux à deux et à raison d'une surface sur chaque mâchoire, de sorte que le dispositif (7a) de mesure de température peut être introduit avec une face quelconque vers le haut (figures 26, 29, 31).

3. Dispositif suivant la revendication 1, pour un dispositif de measure de température dont les conducteurs électriques (9, 10) sont placés sur des faces opposées d'un support (8) en forme de bande, caractérisé en ce que chaque mâchoire (par exemple 23b, 25b) du dispositif à pince comporte sur sa face intérieure une deuxième surface de contact.

4. Dispositif suivant la revendication 1, caractérisé en ce qu'il comporte des moyens (par exemple 24, 26) pour le guidage du dispositif (par exemple 7a) de mesure de température et de ses premières surfaces de contact, pour les amener en contact avec les deuxièmes surfaces de contact (par exemple 31').

5. Dispositif suivant la revendication 4, caractérisé en ce que les moyens de guidage du dispositif (7a) de mesure de température et de ses premières surfaces de contact sont constitués par une gorge (24) sensiblement en forme de V, à l'intérieur d'une des mâchoires (23), et par une nervure correspondante (26), à l'intérieur de l'autre mâchoire (25).

6. Dispositif suivant la revendication 5, caractérisé en ce que la gorge (24) en forme de V et la nervure correspondante (26) ont chacune une section transversale qui diminue vers l'intérieur des mâchoires et qui correspond, à l'endroit le plus éloignée de l'entrée, à la largeur du dispositif (7a) de mesure de température.

7. Dispositif suivant la revendication 1, caractérisé en ce que les mâchoires sont prévues pour être ouvertes contre l'action d'un ressort, qui permet d'obtenir la pression de couplage requise lorsque les mâchoires fermées tiennent le dispositif de mesure de température et ses surfaces de contact.

8. Dispositif suivant l'une quelconque des revendications précédentes, caractérisé en ce que le dispositif à pince comprend un corps creux en forme de boîtier (par exemple 18b) contenant la source d'énergie (45), par exemple une pile, les moyens (45—48) pour la conversion de la valeur mesurée obtenue, ainsi, que l'unité d'affichage (49) qui comporte une fenêtre de lecture extérieure (par exemple 27b), ce corps creux (18b) constituant une mâchoire (23b), tandis que l'autre mâchoire est constituée par un élément (19b) de préhension pour les doigts, qui est monté élastiquement sur le corps.

**Patentansprüche**

1. Zangenähnliche Vorrichtung zum Ergreifen einer Temperaturmeßvorrichtung und zum Darstellen von mit der Meßvorrichtung erhaltenen Werten, wobei die Temperaturmeßvorrichtung einen temperaturempfindlichen Sensor (1) aufweist, dessen elektrische Eigenschaften, z.B. der Widerstand, mit der Temperatur variieren, beispielsweise ein Thermistor, und der über zwei Kontakte (3, 4) an zwei elektrische Leiter (9, 10) angeschlossen ist, die an dem zum Sensor (1) entgegengesetzten Ende mit zwei ersten Kontaktflächen abschließen, wobei die Greif- oder Haltevorrichtung wenigstens zwei zweite Kontaktflächen (31b, 32b; 31', 31'; 31", 31"; 32", 32"; 31a', 32a'; 31a"; 32a") aufweist, die auf der Innenseite oder den Innenseiten der Klauen der zangenähnlichen Vorrichtung angeordnet sind und die mit den ersten Kontaktflächen zusammenschaltbar sind, wenn die Klauen geschlossen werden, dadurch gekennzeichnet, daß diese zweiten Kontaktflächen (31, 32) den Teil einer Schaltung darstellen, die zusätzlich innerhalb der zangenähnlichen Vorrichtung eine Energiequelle (45), eine Display-Einheit (49) und Mittel (45, 46, 47, 48) zur Umwandlung des erhaltenen Meßwertes in einen an der Display-Einheit (49) darstellbaren Meßwert aufweist, wenn der Schaltkreis durch die zangenähnliche Vorrichtung unter geeignetem Ergreifen oder Halten der Temperaturmeßvorrichtung (7) geschlossen wird.

2. Vorrichtung nach Anspruch 1 für eine Temperaturmeßvorrichtung (7a), bei welcher die elektrischen Leiter (9a, 10a) auf ein und derselben Seite eines Trägers (8a) angeordnet sind, dadurch gekennzeichnet, daß jede Klaue (23, 25) des zangenähnlichen Aufbaues an ihrer Innenseite mit zwei der zweiten Kontaktflächen (z.B. 31') zur Verbindung mit den jeweiligen ersten Kontaktflächen auf den elektrischen Leitern (9a, 10a) versehen, ist, wobei diese zweiten Kontaktflächen in zweckmäßiger Weise zwei und zwei mit einer von jeder Klaue derart verbunden sind, daß die Temperaturmeßvorrichtung (7a) mit beliebiger Seite nach oben eingeführt werden kann (Fig. 26, 29, 31).

3. Vorrichtung nach Anspruch 1, für eine Temperaturmeßvorrichtung, bei welcher die elektrischen Leiter (9, 10) auf entgegengesetzten Seiten eines streifenförmigen Trägers (8) angeordnet sind, dadurch gekennzeichnet, daß jede Klaue (z.B. 23b, 25b) der zangenähnlichen Vorrichtung auf ihrer Innenseite mit einer zweiten Kontaktfläche versehen ist.

4. Vorrichtung nach Anspruch 1, gekennzeichnet durch Mittel (z.B. 24, 26) zur Führung der Temperaturmeßvorrichtung (z.B. 7a) und ihrer ersten Kontaktflächen zum Kontakt mit den zweiten Kontaktflächen (z.B. 31').

5. Vorrichtung nach Anspruch 4, dadurch gekennzeichnet, daß die Mittel zur Führung der Temperaturmeßvorrichtung (7a) und ihrer ersten Kontaktflächen aus einer im wesentlichen V-förmigen Einkerbung (24) auf der Innenseite der einen Klaue (23) sowie einem entsprechenden Vorsprung (26) auf der Innenseite der anderen Klaue (25) bestehen.

6. Vorrichtung nach Anspruch 5, dadurch gekennzeichnet, daß die V-förmige Einkerbung (24) und der entsprechende Vorsprung (26) je einen Querschnitt aufweisen, der zur Innenseite der Klauen hin abnimmt und ganz innen mit der Breite der Temperaturmeßvorrichtung (7a) übereinstimmt.

7. Vorrichtung nach Anspruch 1, dadurch gekennzeichnet, daß die Klauen geeignet derart ausgestaltet sind, daß sie gegen die Wirkung einer Feder öffenbar sind, welche so ausgestaltet ist, daß sie den erforderlichen Verbindungsdruck erzeugt, wenn die Klauen die Temperaturmeßvorrichtung und deren Kontaktflächen einschließen.

8. Vorrichtung nach einem der vorhergehenden Ansprüche, dadurch gekennzeichnet, daß die zangenähnliche Vorrichtung einen gehäuseförmigen Mantel (z.B. 18b) aufweist, in welchem die erwähnte Energiequelle (45), beispielsweise eine Batterie, die erwähnten Mittel (45—48) zur Umwandlung des erhaltenen Meßwertes sowie die erwähnte Display-Einheit (49), die ein äußeres Ablesefenster (z.B. 27b) aufweist, eingeschlossen sind, wobei der Mantel (18b) eine Klaue (23b) bildet, während die andere Klaue von einem federnd auf dem Mantel angebrachten Fingergriffteil (19b) gebildet ist.

**Fig. 1**

**Fig. 2**

**Fig. 3**

**Fig. 4**

**Fig. 5**

**Fig. 6**

**Fig. 7**

**Fig. 8**

**Fig. 9**

## Fig.10

19

## Fig. 11

20

## Fig. 12

20

## Fig. 13

23b
27b
28b
18b
25b
19b
20b
29b

3

0 016 752

**Fig. 14**

**Fig. 15**

**Fig. 16**

**Fig. 17**

**Fig. 18**

**Fig. 19**

**Fig. 20**

**Fig. 21**

**Fig. 22**

4

Fig. 23

Fig. 24

Fig. 25

Fig. 26

Fig. 27

Fig. 28

Fig. 29

Fig. 30

Fig. 31

Fig. 32

## Fig. 33

## Fig. 34

## Fig. 35.